Europäisches Patentamt

European Patent Office

Office européen des brevets

(11) Publication number: **0 505 218 A1**

# EUROPEAN PATENT APPLICATION

(21) Application number: **92302476.4**

(22) Date of filing: **23.03.92**

(51) Int. Cl.5: **E02D 3/10, B09B 1/00, E02D 5/52**

(30) Priority: **22.03.91 GB 9106191**

(43) Date of publication of application:
**23.09.92 Bulletin 92/39**

(84) Designated Contracting States:
**BE DE ES FR GB NL PT**

(71) Applicant: **Westpile Limited**
**Dolphin Bridge House, Rockingham Road**
**Uxbridge UB8 2UB(GB)**

(72) Inventor: **Derbyshire, Philip H**
**Lynfield Bledlow Road**

**Saundeston Aylesbury**
**Buckinghamshire(GB)**
Inventor: **Wain, David E**
**46 Lincoln Road**
**Washingborough Lincoln LN4 1EG(GB)**
Inventor: **Turner, Michael J**
**'Synnyside' 5 North End**
**Steeple Claydon Buckinghamshire MK18 2NP(GB)**

(74) Representative: **Clifford, Frederick Alan et al**
**MARKS & CLERK 57/60 Lincoln's Inn Fields**
**London WC2A 3LS(GB)**

(54) **Improvements in venting of landfill and control of leachate.**

(57) An elongate hollow cylindrical pile is composed of a plurality of standard-size sub-units (1,6) at least the lower units (6) of which are gas-pervious by virtue of e.g. through holes (5) typically covering from 5% to 30% of the surface area. A plurality of such piles can be driven percussively, each to the length desired, into landfill (12), and each capped (20) with an offtake duct (21) so that a common pumped exhaust offtake (24,25,26) ensures safe removal of methane arising within the landfill by anaerobic decomposition. Water pipes (22) can also be located along the interior of the hollow piles and similarly connected to a controlled pumped offtake (27) for leachate water.

FIG.5

This invention relates to concrete components and to the installation thereof to provide venting for landfill.

For many generations waste material containing organic matter has been dumped as "land fill", that is, as a filling material for a natural or man made depression or low-quality land e.g. a quarry, clay pit, gravel pit, opencast working or the like. The depth of fill in most instances means that only the very topmost layers become oxidised and that most of the fill, if it is to decompose, does so by anaerobic decomposition. A typical product of such decomposition is methane, which is inflammable and poisonous.

Because the landfill site is not homogenous the gas does not permeate uniformly to the surface and dissipate. Indeed, modern practice seals the landfill under layers of earth (sometimes with actual polymeric sealing layers incorporated), to provide a reclaimed open space. For one reason or another, therefore, methane tends to accumulate in pockets, and to migrate along planes of least resistance, such that it may reach the surface a considerable distance from the point at which it is generated resulting in contamination of land which itself may be some distance from the landfill site. This presents a hazard which requires a well-planned and effective remedy since methane is both toxic and explosive. Indeed, construction work on a reclaimed landfill space is subject to numerous safety regulations on this topic.

In many places, therefore, such generated methane is a problem. In some places, the quantities potentially to be generated are so high as to be a feasible source of energy.

The present invention sets out primarily to provide an installation suitable for the collection of methane for controlled disposal or for industrial use and as a well for the collection and subsequent disposal of leachate water, e.g. by pumping to a treatment works.

A known proposal for dealing with the generated methane involves drilling into the landfill site with a vibrating mandrel carrying a pipe or tube of circular cross section. When such a pipe reaches its full vertical depth it is gradually withdrawn while broken stone is fed into the hole at the same rate. There is formed a core of broken stone providing vent spaces to atmosphere. Care must be taken that movement of the relatively loose landfill material does not clog the gas passages. The methane is usually vented, not collected for safe disposal or industrial use. Moreover, such a structure cannot be used for the control of leachate.

The problem with methane generation is increasing since more organic household and like waste is dumped instead of burnt nowadays. Moreover, modern landfill sites are lined with impervious clay layers and (as indicated above) are even imperviously capped in some cases. This holds in the methane until a substantial pressure is generated and gas forces its way out, or into suitable adjacent spaces, with dangerous consequences.

As a subsidiary problem, moreover, imperviously lined landfill sites can generate an undesirable outflow of water which has percolated through, and leached, the waste with consequent unpleasant loading of pollutants. Again, controlled disposal of water build-up in a site is valuable. The present invention can also provide a suitable assembly of components for this purpose.

The invention envisages the use of pile driving techniques to incorporate into landfill material a plurality of spaced downwardly directed perforate or pervious concrete venting ducts formed generally as driven piles for interconnection at their upper and closed ends to facilitate pumped extraction of gases (largely methane) within the ducts for disposal or onward processing and use. As a subsidiary feature, the invention envisages the permanent or occasional pumping for controlled disposal of water from such ducts (some or all) as lie with their perforations or porosities beneath the water table for the time being within the landfill site.

The invention in one aspect consists in an elongate hollow cylindrical concrete pile, or a length subunit thereof, having gas-pervious walls.

While it is intended to include elongate integral piles within the scope of the invention, the invention is primarily concerned with length subunits which can be installed jointly to constitute a single 'pile'. A technique known as 'shell piling' involves the use of hollow cylindrical units about one meter long, installed end to end using a pile-driving mandrel with a driving toe of dimension to form a suitable hole to accommodate the "shell" units. Units dimensioned for use in such a technique, but gas-pervious, are particularly preferred for practice of the present invention.

The term "gas-pervious" includes permeable, i.e. with micropores or visible pores through the concrete as obtainable by choice of aggregates, cement proportions and other additions e.g. of a fibrous nature. More especially, however, the Applicants prefer to form visible through holes, by moulding or a machine operation, in the concrete walls, for easy passage of gas and (if desired) water. The holes in the wall can be formed totally in the curved portion or can be formed as, for example, castellations or the like at the ends of each shell unit so that assembly inevitably leaves suitable orifices between two units, even if the remainder of the shell is intact.

It will of course be useful if, generally speaking, the fabrication and installation tools for concrete piles can be utilised for the novel units. Thus, in terms of size the units will be normally from 500 to 1500 mms long: one standard length for shell piles is 914 mm. The external diameter can be for example from say 250 mm to 600 mm, and the internal (core) diameter from 150 to 400 mm. Industrial standard sizes (mm) for concrete pile units (external: internal) are 530:381, 440:305, 400:276, 340:241, and 280:165.

Preferred units are those approximately one metre long and 340 mm in external diameter.

The holes can take up a wide range of proportions in terms of total wall area, e.g. from 2% to 70%, but are usually represent about 5-30% e.g. 10-20% of this area. This is because there is no final compressive load requirement (beyond that of coherence during emplacement). Indeed, the normal desiderata of pile driving are completely contradicted by the present invention. The units of the present invention are weakened by the perforations; the cylinder once installed is left hollow instead of being filled and strengthened with reinforced concrete, as normally the case in pile driving; and the holes also allow access for liquid. Normally the concrete is impervious, and of high strength since this resists attack by aggressive materials, and indeed often surface-treated, the better to resist any liquid transfer across its thickness.

Additionally the shell units can be coated both internally and externally with protective paints or coatings further to protect the concrete from the effect of aggressive materials.

In another aspect the invention provides a method for the installation into landfill of a downwardly directed elongate hollow cylindrical concrete pile in which: gas-pervious pile subunits as described above are positioned around a mandrel to be carried on the rim of a disposable concrete driving toe at the lower end of the mandrel; the mandrel and toe are driven percussively into the landfill site and where necessary, mandrel extensions and associated surrounding subunits are added and driven into the landfill site, until a predetermined desired length has been driven; the mandrel, and any extension thereof, is removed; and the hollow assembly is capped with a cap allowing pumped offtake of gas.

Usually driving is effected vertically, but techniques of pile driving at an angle to the vertical can also be used.

It is often desirable although not essential to operate so that the lower subunits are perforate, as discussed above, and the upper unit or units are imperforate. This is because it would not be desirable to draw in surface air by pumping in case an explosive mixture were created.

The assembly can advantageously be driven until the toe just enters any clay liner layers at the base of the landfill, so as to stabilise its structure.

During driving there is necessarily some percussive force exercised on the subunits themselves, to ensure they travel properly into place. Since, in the present invention, these units are perforate, or otherwise weaker than conventional units we have found it advantageous to incorporate resilient shock-absorbing rings between the hammer and that unit for the time being uppermost.

The hollow assemblies are adapted for gas draw-off. Optionally they may (or some of them may) include water pipes for pumping out accumulated leachant water either continuously or occasionally.

The present invention, in a further aspect, consists in an installation of a plurality of such assemblies as defined above within a landfill site, the assemblies having their capped upper ends communicating with a common gas collection system and a pump to draw gas from the totality of the assembled ducting for disposal, treatment or onward transmission. Optionally, if the assemblies include water piping, this also can be arranged to communicate with a common water collection system and pump for controlled disposal of leachate water either continuously or occasionally.

The invention will be further described, by way of example only, with reference to the accompanying drawings, in which:

Fig.1 shows in perspective a prior art concrete pile shell,

Fig.2 shows such a shell but modified in accordance with the present invention,

Fig.3 shows a further embodiment of piling shell in accordance with the present invention,

Fig.4 shows a yet further embodiment of piling shell in accordance with the invention,

Fig.5 shows an installed pile including piling shells as shown in Fig. 3,

Fig.6 shows an integral pile structure in accordance with the invention,

Fig.7 shows in five stages (a) to (e) the installation of a hollow pile including piling shells as shown in Fig. 3, and

Fig.8 shows diagrammatically in plan view a land-fill site having installed thereon a plurality of hollow piles as shown in Fig. 7, with suitable gas and water offtake systems.

In the description of this invention the term "pile" is used generally and includes within its scope any elongate member of length many times longer than its width for installation at an angle or essentially vertically underground, whether or not for support purposes, whether or not hollow or solid, and whether or not installed as prearranged subunits or sequentially added subunits or an integral member. The context will make clear the exact meaning. The term "pile shell", or "piling shell" refers to hollow cylindrical subunits utilised in building up a pile longitudinally, whether subsequently filled as in the prior art or left hollow as in the present invention.

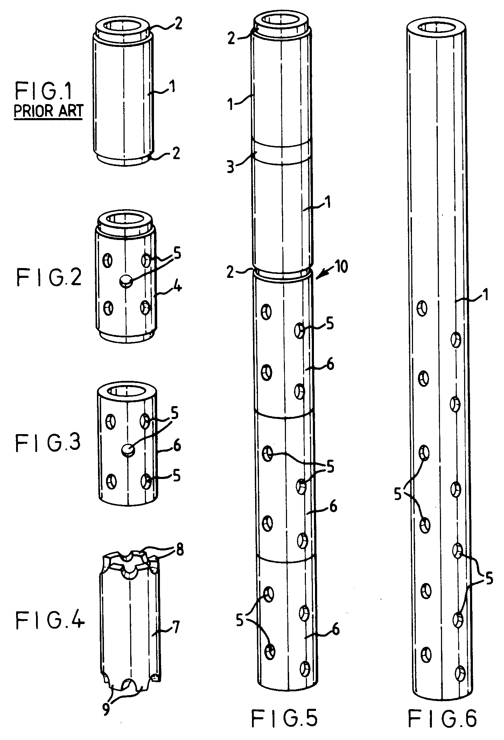

Figure 1 shows in perspective a prior art piling shell 1, which is a robust hollow cylinder of concrete conventionally provided at each end with an inwardly stepped shoulder 2.

An aligned vertical underground accumulation of such shells constitutes the outer part of a load-bearing pile, i.e. as used in ground of inadequate support characteristics to reach and embed into underlying supportive strata. Installation is effected by stacking a group of such shells around a vertical metal mandrel with a concrete driving toe at the base, on which the shells sit. Thin steel sleeves 3 (see Fig.5) are coated internally with mastic and located around the joints between successive shells, in shoulders 2. Percussive force on the mandrel, and to a lesser extent on the stack of shells, sinks the pile until the top of the topmost shell is more or less at ground level. If the stack is still of inadequate length, the percussion weight is lifted, a mandrel extension is fixed to the top of the original mandrel, another shell is located around this extension, and another steel band fixed into the available shoulders. This extended portion is then driven in to ground level. Further extensions are added and the procedure repeated until the lower end of the assembly has reached and become embedded in secure underlying strata. Finally, the mandrel is withdrawn and the hollow filled with concrete and reinforcement, to bind to the shells as it sets.

The purpose of this prior art device and procedure is to give solid load-bearing assemblies i.e. of high compressive strength, free as far as possible from water ingress between the shells in case this attacks the concrete.

In contrast, the present invention provides, whilst using such pile-driving techniques, a hollow, usually vertical, duct not extending to secure load-bearing strata, specifically provided with wall orifices to allow ingress of gas and water, and, because of its hollow and perforate (or pervious) nature, unsuitable for load-bearing. It thus represents a total departure from the normal rationale of pile-driving.

Fig. 2 shows one embodiment of shell according to the invention, which is installed as described in, and for the purposes described in, more detail below. Since the installation techniques involve piling equipment the shell is referred to herein for convenience as a "piling shell" notwithstanding its different structure and purpose.

In Figure 2 the piling shell 4 resembles that of Fig. 1, but is provided with perforations 5 for flow of gas and/or liquid through the walls. Such perforations 5 can be large, as shown, or of small calibre. It is also intended to include within the invention pervious concretes, i.e. with communicating pores from inner surface to outer surface, as well as perforate structures. Whether pervious or perforate, however, the shells have less compressive strength than the shells of Fig. 1, and are used hollow without substantive embedment in load-bearing strata so that they are unsuitable for load-bearing piles.

Since gas or water can enter the hollow installed shell 4 it is not always necessary to include a sealed jointing band 3 to occupy shoulders 2. The shell, thus, as referenced at 6 in Figure 3 therefore need not include such shoulders. However, a) these bands will control driving stresses in the shells particularly if the assembly meets concrete or other obstructions in the fill material during the installation process; and b) they will also provide some stiffness (albeit temporary before corrosion sets in) between one shell and another after installation.

Fig. 4 indicates that provided the assembly is pervious or perforate the individual shells need not be. Shells 7 are configured at their ends 8 and 9 so that when two shells 7 are assembled they define gaps to permit passage of gas or water. The configurations 8 and 9 need not be assembled to register.

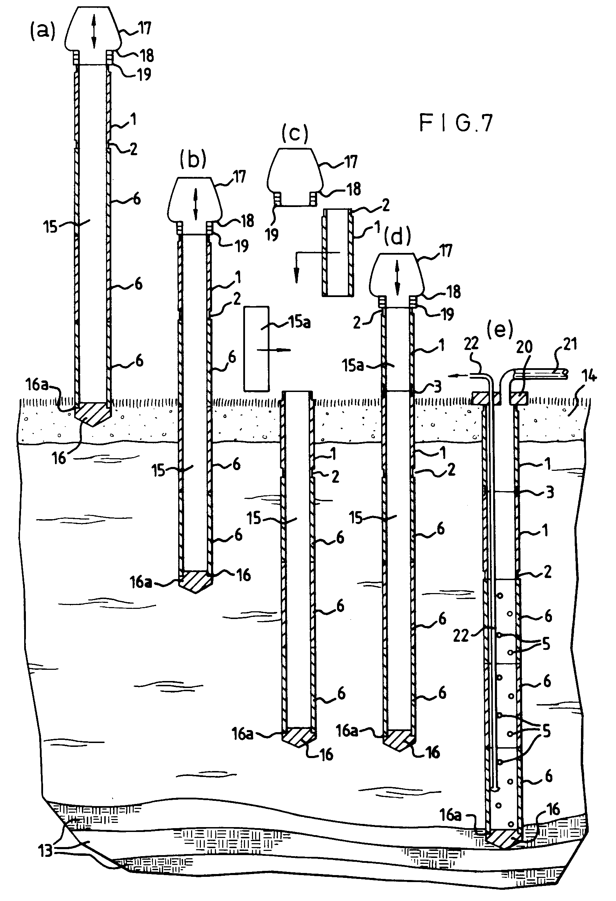

Fig. 5 shows a typical subsurface installation 10 which can be built up (as described below with reference to Figure 7), in which lower shell units 6 are perforate and upper shell units 1 are imperforate. It is within the compass of the invention also to provide an elongate integral hollow "pile" 11, as shown in Figure 6, which can be installed in one operation, although the general arrangement of Fig. 5 is more flexible as to length, headroom need for pilling etc.

Fig. 7 illustrates diagrammatically stages (a) to (e) in the subsurface installation in accordance with the invention of a hollow "pile".

Fig. 7 illustrates the installation of such a pile (i.e. as shown in Fig.5) in a volume of landfill material 12, properly located in a depression sealed with clay layers 13 and capped with a layer of earth 14 and optionally layers of gas-impervious sheeting (not shown). In Fig. 7a, a central metal mandrel 15 carries at its lower end a concrete driving toe 15 of which has just entered the capping layer 14, and has a slightly larger diameter than the mandrel 15 to define a shoulder 16a, upon which stand successively a stack of three perforate shell piling units 6 (Fig.3) topped with an impervious shell 1. The percussive hammer 17 is configured at 18 to hold shock absorbing annuli 19, so that the necessary hammering movement is effected predominantly on the steel mandrel 15 and only to a buffered and minor extent on the stacked concrete shells 1 and 6. The other features of the pile driving equipment, i.e. the frame, the engine etc, are conventional and not shown in detail.

Fig.7b shows the composite pile halfway through the thickness of the landfill deposit.

Fig.7c shows the composite pile of Figure 7(a) hammered in to its maximum extent, but still wholly located in the landfill material. It is usually desirable, because this material is loose and can move over the years, to stabilise the position of the pile. This is preferably done (see Fig. 7e) by causing the toe 16 to enter but not penetrate the clay sealing layers 13. In order to lengthen the 'pile' the hammer 17 is raised; mandrel extension 15a is fixed to the top of the mandrel; and additional imperforate piling shell 1 is placed over this extension, being, if desired, united with its lower counterpart by plastic-backed steel band 3 in the adjacent shoulder 2. The new assembly is then hammered further down (Fig.7d) until the toe 16 enters layers 13, or until the lengthening procedure has to be repeated. While it is valuable to have perforate shells at the bottom of the pile, the exact configuration and the total number of shells used will depend upon the contours of the landfill site.

Fig. 7e shows the final stage of the installation process. The mandrel has been removed, and the hollow "pile" has been capped at 20. A gas duct 21 leads away from the cap, and if desired a water pipe 22 passes down through the cap to the bottom of the "pile".

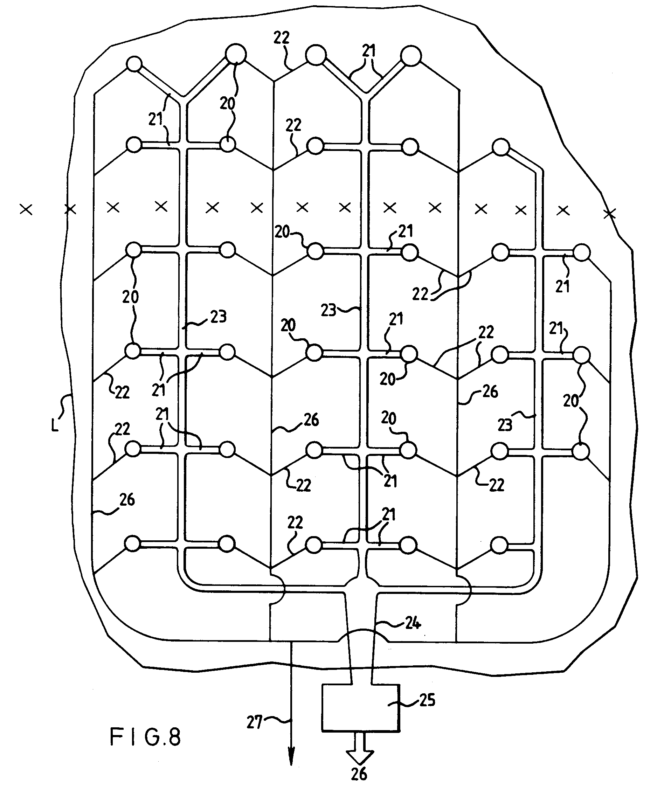

It is intended that such installations should be spaced apart on a grid pattern. Fig. 8 shows, in plan view, a number of capped piles 20 within a landfill site L, with gas ducts 21 feeding by common offtakes 23 themselves connected to a manifold 24 from which methane gas can be pumped by pump 25, to be flared or utilised as a fuel depending on volume and uniformity of supply. Water offtake pipes 26, if needed, are again connected to the capped piles 20 and feed a common controlled outlet 27 for leachate which can therefore be diverted from sensitive locations.

While the composite "piles" are not loadbearing, they do not interfere with the function of loadbearing piles, and indeed utilise the same installation equipment. Thus, a line of conventional loadbearing piles X can intersect the landfill area if needed, being driven well into the substrate and being independent of the venting piles in accordance with the invention.

Thus, there is provided rapid easy reliable venting from the deeper portions of a landfill site, to draw off methane gas and (if present) subsurface leachate water, using current installation techniques and easily fabricated constructional units.

## Claims

1. An elongate hollow cylindrical concrete pile (10,11) characterised in that the walls thereof are gas-pervious (5) over at least part of its length from a lower end.

2. An elongate hollow cylindrical concrete pile as claimed in claim 1 characterised in that it comprises length sub-units at least one lower end unit (4,6,7) of which is gas pervious.

3. An elongate hollow cylindrical concrete pile as claimed in claim 2 characterised by comprising at least one impervious upper end sub-unit (1) and a plurality of gas-pervious lower end sub-units (4,6,7).

4. A hollow cylindrical concrete pile sub-unit (4,6,7) characterised in that the walls thereof are gas-pervious (5).

5. A pile sub-unit as claimed in claim 4 characterised by comprising through holes (5) for gas permeation formed by moulding or a machine operation in the curved walls thereof.

6. A pile sub-unit as claimed in claim 4 characterised by comprising castellations (8,9) which upon assembly of two adjacent sub-units jointly provide through holes for

7. A pile sub-unit as claimed in claims 4, 5 or 6 characterised by being from 500 to 1500 mm long, 250 to 600 mm external diameter and 150 to 400 mm internal diameter.

8. A pile sub-unit as claimed in claim 7 which is 914 mm long and either 530:381, 400:305, 400:276, 340:231 or 280:165 mm, external and internal diameters respectively.

9. A pile sub-unit as claimed in any one of claims 4 to 8 characterised in that the holes (5,8,9) represent from 5 to 30% of the total wall area.

10. A pile sub-unit as claimed in any one of claims 4 to 9 which is coated internally and/or externally with protective paint.

11. An elongate pile as claimed in claim 1, 2 or 3 composed over at least part of its length of length sub-units as claimed in any one of claims 4 to 10.

12. A method for the installation into landfill (12) of a downwardly directed elongate hollow cylindrical concrete pile characterised in that gas-pervious pile sub-units as claimed in any of claims 4 to 10 are positioned around a mandrel (15) so as to be carried on the rim of a disposable concrete driving toe (16) at the lower end of the mandrel (15); the mandrel (15) and toe (16) are driven percussively into the landfill site; any necessary mandrel extensions (15a) and associated surrounding sub-units (6 or 1) are added and driven into the landfill site (12), until a predetermined desired length has been driven; the mandrel, and any extension thereof, is removed; and the hollow assembly is capped with a cap (20) allowing pumped offtake (21) of gas.

13. A method as claimed in claim 12 effected until the toe (16) enters the underlying layer (13) beneath the landfill (12).

14. A method as claimed in claim 12 or 13 in which the uppermost edge of the top unit is provided with at least one resilient shock-absorbing ring (19) upon which a hammer (17) exerts the percussive driving force.

15. An installation within a landfill site (12) of a plurality of elongate hollow piles as claimed in claim 1, 2, 3 or 11 or as installed by the method of claim 12, 13 or 14, characterised by each pile, having capped upper ends (20) communicating via ducting (21) with a common gas collection system (24) and gas extraction pump (25,26).

16. An installation as claimed in claim 15 characterised in that a water extraction pipe (22) extends downwardly within each hollow pile and that the pipes (22) communicate at their upper ends with a common liquid collecting system (26) and extraction pump for controlled disposal (27) of liquid leachate.

FIG.1
PRIOR ART

FIG.2

FIG.3

FIG.4

FIG.5

FIG.6

F I G.7

FIG.8

European Patent Office

**EUROPEAN SEARCH REPORT**

Application Number

EP    92 30 2476

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-1 030 619 (COURBOT) | 1,2,4, 11,14 | E02D3/10 B09B1/00 |
| Y | * page 2, line 28 - line 68 * | 5,12 | E02D5/52 |
| A | * figures 1-5 * | 3 | |
| | --- | | |
| Y | US-A-1 408 877 (FUNK) | 5 | |
| | * page 1, left column, line 8 - line 32; figure 3 * | | |
| | --- | | |
| Y | DE-U-8 908 140 (FRANK DEPONIE TECHNIK) | 12 | |
| A | * page 7, line 23 - page 8, line 4; figure 3 * | 1 | |
| | --- | | |
| A | DE-A-2 655 541 (TRADER STRAHM) | 1-4,11 | |
| | * page 5, line 1 - line 21 * | | |
| | * page 9, line 5 - line 32 * | | |
| | * page 11, line 21 - page 12, line 20; figures 1,2 * | | |
| | --- | | |
| A | EP-A-0 173 667 (MONSANTO) | 15 | |
| | * page 3, line 28 - page 4, line 7; figure 1 * | | TECHNICAL FIELDS SEARCHED (Int. Cl.5) |
| | --- | | |
| A | WO-A-8 806 209 (HOLSTEINER GAS GESELLSCHAFT) | 16 | |
| A | * page 9, line 10 - line 26; figure 8 * | 1 | |
| | | | E02D B09B B28B |
| | ----- | | |

The present search report has been drawn up for all claims

| Place of search | Date of completion of the search | Examiner |
|---|---|---|
| THE HAGUE | 03 JUNE 1992 | BELLINGACCI F. |

EPO FORM 1503 03.82 (P0401)